# EUROPÄISCHE PATENTSCHRIFT

(11) **EP 3 260 822 B1**
(45) Veröffentlichungstag und Bekanntmachung des Hinweises auf die Patenterteilung: **15.07.2020**
(21) Anmeldenummer: 16175499.9
(22) Anmeldetag: 21.06.2016
(51) Int. Cl.: G01F 11/02, B01L 3/02, G01N 35/10

(54) **MEHRKANALSPRITZE FÜR DEN GEBRAUCH MIT EINER DOSIERVORRICHTUNG**
MULTI-CHANNEL SPRAY FOR USE WITH A METERING DEVICE
SERINGUE MULTIVOIE POUR L'UTILISATION A L'AIDE D'UN DISPOSITIF DE DOSAGE

(43) Veröffentlichungstag der Anmeldung: 27.12.2017
(73) Patentinhaber: EPPENDORF AG, 22339 Hamburg (DE)
(72) Erfinder: Reichmuth, Burkhardt, 22041 Hamburg (DE)
(74) Vertreter: Hauck Patentanwaltspartnerschaft mbB

(56) Entgegenhaltungen:
- EP-A1- 2 190 582
- EP-A2- 0 172 508
- DE-A1- 19 750 145
- JP-B2- 3 389 352

## Beschreibung

Die Erfindung betrifft eine Mehrkanalspritze für den Gebrauch mit einer Dosiervorrichtung zum Dosieren von Flüssigkeiten im Labor mit einer ersten Halteeinrichtung für eine Zylinderhalteeinrichtung eines Spritzenzylinders und einer axial verlagerbaren zweiten Halteeinrichtung für eine Kolbenhalteeinrichtung eines Spritzenkolbens.

Pipetten werden insbesondere in medizinischen, biologischen und chemischen Labors für die Dosierung von Flüssigkeiten eingesetzt. Luftpolsterpipetten haben eine integrierte Verdrängungseinrichtung für Luft und mindestens einen Sitz für eine Pipettenspitze. Die Verdrängungseinrichtung ist in der Regel durch einen Zylinder mit einem darin abdichtend geführten, verschiebbaren Kolben gebildet. Wenn die Pipettenspitze an dem Sitz gehalten ist, ist sie kommunizierend mit der Verdrängungseinrichtung verbunden. Mittels der Verdrängungseinrichtung ist ein Luftpolster verlagerbar, sodass durch eine Spitzenöffnung Flüssigkeit in die Pipettenspitze eingesogen und daraus ausgestoßen werden kann. Nach dem Gebrauch kann die Pipettenspitze vom Sitz gelöst und gegen eine frische Pipettenspitze ausgetauscht werden.

Mehrkanalpipetten dienen dazu, gleichzeitig Flüssigkeit aus einem oder mehreren Gefäßen aufzunehmen und in ein oder mehrere Gefäße abzugeben. Mehrkanalpipetten werden vielfach für die Bearbeitung von Mikrotiterplatten benutzt, die in matrixartiger Anordnung eine Vielzahl Gefäße aufweisen. Mikrotiterplatten mit 96 oder 384 Gefäßen gemäß SBS-Standard sind weit verbreitet. Hierfür haben Mehrkanalpipetten mehrere, in einer Reihe parallel nebeneinander auf gleicher Höhe angeordnete Sitze für Pipettenspitzen. Wenn mehrere Pipettenspitzen an den Sitzen gehalten sind, sind sie jeweils kommunizierend mit einer gesonderten Verdrängungseinrichtung oder einer gemeinsamen Verdrängungseinrichtung verbunden. In Anpassung an ein häufig benutztes Format von Mikrotiterplatten mit 96 (= 8 x 12) Gefäßen weisen Mehrkanalpipetten häufig 8 oder 12 Sitze für Pipettenspitzen auf. Nach dem Gebrauch können die mehreren Pipettenspitzen von den Sitzen gelöst und gegen frische Pipettenspitzen ausgetauscht werden. Derartige Mehrkanaldosiervorrichtungen sind beispielsweise in der EP 1 739 434 B1 und in der EP 2 735 369 A1 beschrieben.

Luftpolsterpipetten haben meist eine Abwurfeinrichtung, um die Pipettenspitze nach Gebrauch von ihrem Sitz zu lösen, ohne diese mit der Hand anzufassen. Bei Mehrkanalpipetten ist der Kraftaufwand für den Abwurf der mehreren Pipettenspitzen erhöht. Die DE 10 2004 003 433 B4 beschreibt eine Mehrkanalpipette, die den Kraftaufwand für die Betätigung der Abwurfeinrichtung dadurch vermindert, dass sie durch verfederte Zapfen und einen Anschlag die Kraft für das Aufklemmen der Pipettenspitzen auf die Zapfen begrenzt.

Die EP 2 735 369 A1 beschreibt eine Mehrkanalpipette, die den Kraftaufwand für die Betätigung der Abwurfeinrichtung dadurch vermindert, dass der Abwerfer verschiedene Abwerferteile aufweist, die nacheinander die Pipettenspitzen von den Zapfen abdrücken.

Nachteilig bei Luftpolsterpipetten ist, dass sie für das Dosieren von hochviskosen oder schäumenden Flüssigkeiten oder Flüssigkeiten mit hohem Dampfdruck schlecht oder gar nicht geeignet sind. Bei hochviskosen oder schäumenden Flüssigkeiten ist eine geringe Dosiergeschwindigkeit erforderlich, Flüssigkeiten mit hohem Dampfdruck können nur ungenau dosiert werden. Eine weitere Ungenauigkeit beruht auf der Längung des Luftpolsters durch das Gewicht der Flüssigkeitssäule in der Pipettenspitze und auf der Längenänderung des Luftpolsters durch Temperaturänderungen. Infolgedessen weicht die Volumenverdrängung der Verdrängungseinrichtung von dem in der Pipettenspitze aufgenommenen Flüssigkeitsvolumen ab. Ferner können Aerosole aus der in die Pipettenspitze aufgenommenen Flüssigkeit in die Luftpolsterpipette wandern und diese kontaminieren. Mehrkanalpipetten bestehen aus einer Vielzahl Einzelteile und sind besonders aufwendig. Luftpolsterpipetten sind hinsichtlich der Bestückbarkeit mit Pipettenspitzen unterschiedlichen Volumens stark eingeschränkt, da die integrierte Verdrängungseinrichtung ein vorgegebenes Verdrängungsvolumen hat.

Direktverdrängerpipetten haben einen integrierten Antrieb für einen Spritzenkolben einer Spritze. Eine Spritze aus Kunststoff kann mit der Direktverdrängerpipette verbunden werden, sodass der Spritzenzylinder an der Direktverdrängerpipette gehalten und der Spritzenkolben mit dem Antrieb gekoppelt ist. Der Antrieb verlagert den Spritzenkolben, sodass Flüssigkeit durch eine Spritzenöffnung eingesogen und ausgestoßen wird. Hierbei bleibt der Spritzenkolben in Kontakt mit der Flüssigkeit. Nach dem Dosieren kann die gebrauchte Spritze gegen eine frische Spritze ausgetauscht werden. Da sich kein Luftpolster zwischen Spritzenkolben und Flüssigkeit bildet, eignen sich Direktverdrängerpipetten auch für das Dosieren hochviskoser oder schäumender Flüssigkeiten oder von Flüssigkeiten mit hohem Dampfdruck. Ungenauigkeiten durch Längenänderung eines Luftpolsters und Kontamination durch Aerosole werden vermieden.

Die Direktverdrängerpipette "Biomaster®" der Eppendorf AG ist ausgebildet, in eine kleine Spritze aufgenommene Flüssigkeit in einem einzigen Schritt abzugeben (Pipettieren).

Direktverdrängerpipetten sind meist als Dispenser (auch "Repetierpipetten" genannt) ausgeführt. Mittels eines Dispensers kann Flüssigkeit in eine Spritze aufgenommen und schrittweise aus dieser abgegeben (Dispensieren) werden. Bekannt sind Dispenser, bei denen die bei jedem Schritt abzugebende Dosiermenge einstellbar ist. Direktverdrängerpipetten sind variabel mit Spritzen mit unterschiedlichen Füllvolumina bestückbar, die sich voneinander durch unterschiedliche Durchmesser bzw. Länge des Spritzenzylinders unterscheiden. Dispenser ermöglichen eine hohe Variabilität der Dosiermengen.

Bekannt sind Luftpolsterpipetten und Direktverdrängerpipetten mit manuell angetriebenen oder mit elektromotorischen Antrieben. Dispenser mit elektromotorischen Antrieben sind auch zum Pipettieren verwendbar, d.h. zum Abgeben der aufgenommenen Flüssigkeit in einem einzigen Abgabeschritt.

Ein manuell angetriebener Dispenser mit Dosiermengeneinstellung ist in der DE 29 26 691 C2 und der US 4,406,170 beschrieben. Eine kommerzielle Ausführung dieses Dispensers ist die Multipette® 4780 der Eppendorf AG. Dieser Dispenser ist mit einer Spritze, z.B. den Combitips® der Eppendorf AG, bestückbar, wobei unter Spritzen mit verschiedenen Füllvolumina ausgewählt werden kann. Mit dem Plus/8-Adapter lässt sich der Dispenser Multipette® 4780 in einen achtkanaligen Handdispenser verwandeln. In den Adapter passt eine Kartusche, die acht Kunststoffspritzen enthält. Auf die acht Kunststoffspritzen sind acht Pipettenspitzen aufklemmbar. Mittels der Kunststoffspritzen wird ein Luftpolster verlagert, wodurch Flüssigkeit in die Pipettenspitzen aufgenommen und in diese eingesogen wird. Der Dispenser wird in eine Luftpolsterpipette umfunktioniert.

Die US 4,591,072 beschreibt einen Dispenser, der einen entgegen der Wirkung einer Rückstellfeder betätigbaren Betätigungsknopf aufweist. Der Betätigungsknopf ist über eine Zahnstange mit einem Schieber verbunden. Der Schieber ist lösbar mit den Kolben einer Spritzeneinheit verbunden, die mehrere identische Spritzen umfasst. Der Schieber ist über eine Antriebsstange mit einem Aufnahmeknopf verbunden, der verschiebbar an der Außenseite des Dispensers angeordnet ist. Eine Klinke arbeitet mit der Zahnstange zusammen, wobei sie außer Eingriff mit der Zahnstange ist, wenn der Betätigungsknopf nicht betätigt wird, und bei Betätigung des Betätigungsknopfes in Eingriff mit der Zahnstange kommt, um die schrittweise Abgabe gleich großer Flüssigkeitsmengen aus sämtlichen Spritzen zu ermöglichen. Die Spritzeneinheit umfasst einzeln vorgefertigte Spritzen, die in einen Halter eingesetzt sind. Der Halter ist wiederum in den Dispenser eingesetzt, sodass die Spritzenkolben mit dem Schieber in Eingriff kommen. Das Bestücken der Spritzeneinheit mit Spritzen und der Austausch gebrauchter Spritzen gegen frische Spritzen ist aufwendig.

Das Modell 8800 der Nichiryo America Inc. ist eine kommerzielle Ausführung eines ähnlichen Dispensers mit acht Kanälen.

Die JP 3389352 B2 beschreibt eine Dispensiermaschine mit einer Mehrkanalpipette und darauf aufsteckbaren Pipettenspitzen. Die Mehrkanalpipette umfasst eine einteilige Kolbeneinheit mit mehreren parallelen Kolben an einer Traverse, die fest über eine Stange mit einer Antriebseinrichtung verbunden ist. Eine einteilige Zylindereinheit der Mehrkanalpipette umfasst eine Platte und davon nach unten vorstehende Zylinder. Jeder Kolben greift in einen Zylinder ein und ist am oberen Rand der Platte abdichtend durch einen O-Ring hindurch geführt. Die Platte und die O-Ringe sind an der Unterseite einer Bodenwand eines Gehäuses der Dispensiermaschine festgelegt. Ein Wechsel der Kolbeneinheit und der Zylindereinheit ist nicht vorgesehen. Zum Dosieren unterschiedlicher Flüssigkeitsvolumen umfasst die Mehrkanalpipette Kolben mit kleinem Außendurchmesser, die in Zylinder mit entsprechend kleinem Innendurchmesser eingreifen, und Kolben mit großem Außendurchmesser, die in Zylinder mit entsprechend großem Innendurchmesser eingreifen.

Die DE 197 50 145 A1 beschreibt eine Mehrzylinderpipette mit einem Satz aus mindestens drei Zylindern, von denen jeder einen Kolben umfasst. Der Satz von Zylindern ist aus gesonderten Elementen zusammengesetzt, von denen wenigstens eines ein Mehrzylinderelement mit wenigstens zwei Zylindern ist. Bei einem Mehrzylinderelement ist jeder Zylinder mit einem gesonderten Spitzenelement zum Aufstecken einer Pipettenspitze verbunden. In die Zylinder sind zwei Kolben eingesetzt, die oberhalb des Zylinders abdichtend durch eine Dichtung hindurchgeführt sind. Die beiden Kolben bestehen aus mehreren Teilen, die an einander zugewandten Oberflächen zusammengepresst sind, sodass ein Vorsprung des einen Kolbens in eine Vertiefung des anderen Kolbens eingreift. Die miteinander verbundenen Kolbenteile weisen einen Flansch am oberen Ende auf. Mehrere Kolbenpaare werden an ihren Flanschen an einem Betätigungsarm gehalten, der mit einer Kolbenstange verbunden ist, die an ihrem oberen Ende einen Bedienknopf aufweist. Bei einem anderen Mehrzylinderelement sind zwei Zylinder an ihrem unteren Ende mit einem einzigen Spitzenelement zum Aufstecken einer Pipettenspitze verbunden. Mehrere Mehrzylinderelemente werden zu einem Körper am unteren Ende des Handgriffs der Mehrkanalpipette zusammengefasst.

Davon ausgehend liegt der Erfindung die Aufgabe zugrunde, eine mehrere Spritzen umfassende Spritzeneinheit zu schaffen, die weniger aufwendig und anwendungsfreundlicher ist.

Die Aufgabe wird durch eine Mehrkanalspritze mit den Merkmalen von Anspruch 1 gelöst. Vorteilhafte Ausgestaltungen der Mehrkanalspritze sind in Unteransprüchen angegeben.

Die erfindungsgemäße Mehrkanalspritze arbeitend als Direktverdränger für den Gebrauch mit einer Dosiervorrichtung zum Dosieren von Flüssigkeiten im Labor mit einer ersten Halteeinrichtung für eine Zylinderhalteeinrichtung eines Spritzenzylinders und einer axial verlagerbaren zweiten Halteeinrichtung für eine Kolbenhalteeinrichtung eines Spritzenkolbens umfasst
- eine einteilige Kolbeneinheit aus Kunststoff, die eine Antriebsstange mit der Kolbenhalteeinrichtung am oberen Ende, eine senkrecht zur Antriebsstange gerichtete Traverse am unteren Ende der Antriebsstange und mehrere von der Traverse nach unten vorstehende, zur Antriebsstange parallele Spritzenkolben aufweist,
- eine einteilige Zylindereinheit aus Kunststoff umfassend einen Träger und mindestens eine Reihe parallel nebeneinander angeordneter, vom Träger nach unten vorstehender Spritzenzylinder, die jeweils untere Spritzenöffnungen, obere Spritzenöffnungen und im Inneren einen zylindrischen Laufbereich für einen Spritzenkolben der Kolbeneinheit haben,
- wobei jeder Spritzenkolben durch eine obere Spritzenöffnung hindurch in einen Spritzenzylinder eingreift und abdichtend im Laufbereich geführt ist, und
- die Zylinderhalteeinrichtung oberhalb der Spritzenzylinder angeordnet und mit dem Träger verbunden ist.

Die erfindungsgemäße Mehrkanalspritze hat den Vorteil, dass die mehrere Spritzenkolben umfassende Kolbeneinheit aus Kunststoff und die mehrere Spritzenzylinder und einen damit verbundenen Träger umfassende Zylindereinheit aus Kunststoff jeweils in einem besonders wirtschaftlichen Verfahren mit hohen Ausbringungsmengen gefertigt werden können. Kolbeneinheit und Zylindereinheit können besonders toleranzarm gefertigt werden, sodass daraus besonders toleranzarme Mehrkanalspritzen gebildet werden können, die eine Dosierung mit besonders hoher Präzision ermöglichen. Durch Zusammenfügen der Kolbeneinheit und der Zylindereinheit werden mehrere parallele Spritzen der Mehrkanalspritze gleichzeitig gebildet. Das Zusammenfügen von Kolbeneinheit und Zylindereinheit ist besonders einfach und schnell durchführbar und besonders gut für die Automatisierung geeignet. Dadurch, dass die Mehrkanalspritze als Direktverdränger arbeitet, ist sie für den Gebrauch mit hochviskosen oder schäumenden Flüssigkeiten oder Flüssigkeiten mit einem hohen Dampfdruck geeignet. Zudem werden die systembedingten Ungenauigkeiten von Luftpolsterpipetten und eine Kontamination der Dosiervorrichtung vermieden. Der Aufwand für die Mehrkanalspritze ist im Vergleich zu herkömmlichen Mehrkanalpipetten gering, weil aufwendige Einzelteile zum Bilden der Verdrängungseinrichtungen, verfederten Zapfen und Abwurfeinrichtungen vermieden werden. Aufgrund der einfachen Konstruktion hat die Mehrkanalspritze ein nur geringes Gewicht. Dies erleichtert das Handling bei Gebrauch der Mehrkanalspritze mit einer als Handgerät ausgeführten Dosiervorrichtung. Stationäre Dosiervorrichtungen für den Gebrauch mit der Mehrkanalspritze können wegen der verringerten Lasten einfacher ausgelegt werden. Ferner ist bei der erfindungsgemäßen Mehrkanalspritze die Variabilität der Füllvolumina der Spritzen besonders groß. Spritzen mit unterschiedlichen Füllvolumina können leicht durch Kolbeneinheiten mit Spritzenkolben und Zylindereinheiten mit Spritzenzylindern mit unterschiedlichen Durchmessern und/oder unterschiedlichen Längen gebildet werden. Die Zylinderhalteeinrichtung und die Kolbenhalteeinrichtung sind oberhalb der Spritzenzylinder angeordnet. Die Zylinderhalteeinrichtung kann leicht mit einer ersten Halteeinrichtung und die Kolbenhalteeinrichtung mit einer zweiten Halteeinrichtung einer Dosiervorrichtung verbunden werden. Die Zylinderhalteeinrichtung und die Kolbenhalteeinrichtung der Mehrkanalspritze sind vorzugsweise wie bei der Zylinderhalteeinrichtung und der Kolbenhalteeinrichtung herkömmlicher einfacher Spritzen für den Gebrauch mit einer Dosiervorrichtung ausgebildet. Dies ermöglicht den Gebrauch der Mehrkanalspritze mit herkömmlichen Dosiervorrichtungen, die bereits mit einfachen Spritzen gebraucht werden. Die Verbindung der Mehrkanalspritze mit der Dosiervorrichtung und das Lösen der Mehrkanalspritze erfolgt wie bei dem Verbinden der Dosiervorrichtung mit herkömmlichen einfachen Spritzen. Ein erhöhter Kraftaufwand ist hierfür nicht erforderlich. Die Mehrkanalspritze kann vorteilhaft als Einmalteil (*disposable*) verwendet werden, insbesondere in steriler Ausführung.

Gemäß einer bevorzugten Ausführungsart der Erfindung ist die Traverse plattenförmig, weist eine geradlinige, senkrecht zur Antriebsstange gerichtete Basis auf, von der die Spritzenkolben nach unten vorstehen, und hat eine erste Verjüngung nach oben, wobei die Antriebsstange vom oberen Ende der Traverse nach oben vorsteht. Diese Ausführungsart ist hinsichtlich der Kraftübertragung von der Antriebsstange auf die Spritzenkolben besonders vorteilhaft und materialsparend. Gemäß einer bevorzugten Ausführungsart ist die Traverse dreiecksförmig oder trapezförmig ausgebildet.

Gemäß einer weiteren Ausführungsart weist jeder Spritzenkolben eine Kolbenstange auf, die oben mit der Traverse und unten mit einem Kolben verbunden ist, der abdichtend im Laufbereich geführt ist. Bei dieser Ausführungsart sind die Spritzenkolben besonders materialsparend ausgebildet und reibungsarm im Laufbereich geführt. Gemäß einer weiteren Ausführungsart ist jeder Kolben kreisscheibenförmig ausgebildet. Gemäß einer weiteren Ausführungsart weist jeder Kolben am Umfang eine umlaufende Dichtlippe auf. Gemäß einer weiteren Ausführungsart ist die Dichtlippe schürzenförmig, wobei sie sich vom Umfang des Kolbens nach unten erstreckt. Gemäß einer weiteren Ausführungsart hat die Dichtlippe eine umlaufende Verdickung, die abdichtend am Laufbereich anliegt.

Gemäß einer weiteren Ausführungsart weist jeder Spritzenkolben am unteren Ende eine Kolbenspitze und jeder Spritzenzylinder am unteren Ende eine Zylinderspitze auf, in die die Kolbenspitze einschiebbar ist. Hierdurch werden restliche Flüssigkeitsmengen aus der Mehrkanalspritze entfernt.

Gemäß einer weiteren Ausführungsart weisen die Traverse und/oder die Antriebsstange und/oder die Kolbenstangen parallel zu den Spritzenkolben erstreckte, nach außen vorstehende Rippen auf. Durch die Rippen wird die Stabilität verbessert und eine materialsparende Ausführung begünstigt.

Gemäß einer weiteren Ausführungsart umfasst der Träger eine Bodenwand eines Gehäuses, die einteilig mit den Spritzenzylindern ausgebildet ist, und weist das Gehäuse von der Bodenwand nach oben vorstehende Seitenwände auf, die oben mit der Zylinderhalteeinrichtung verbunden sind. Durch das Gehäuse kann die Stabilität des Trägers erhöht, Material eingespart und die Spritzen von Verunreinigungen geschützt werden. Gemäß einer weiteren Ausführungsart ist das Gehäuse ein kastenförmiges Gehäuse.

Gemäß einer weiteren Ausführungsart umfasst der Träger das Gehäuse, sodass dieses Bestandteil der Zylindereinheit ist. Diese Ausführungsart kann besonders stabil und materialsparend ausgebildet sein.

Gemäß einer weiteren Ausführungsart ist die Bodenwand an zwei einander gegenüberliegenden Längsseiten über Filmscharniere einteilig mit den Seitenwänden verbunden, mindestens eine Seitenwand oben mit der Zylinderhalteeinrichtung verbunden, sind die Seitenwände um die Filmscharniere zusammengeklappt und sind die zusammengeklappten Seitenwände miteinander verbunden. Dies ist vorteilhaft für das Herstellen durch Spritzgießen, weil eine Spritzgießform zum Spritzgießen der Zylindereinheit mit auseinandergeklappten Seitenwänden besonders einfach ausgebildet und die Zylindereinheit nach dem Spritzgießen leicht entformt werden kann. Das Zusammenklappen vereinfacht das Konfektionieren der Mehrkanalspritze.

Gemäß einer weiteren Ausführungsart weisen die Seitenwände an ihren beiden seitlichen Rändern vorstehende schmale Seitenwandteile auf, wobei jeweils zwei schmale Seitenwandteile der zusammengeklappten Seitenwände gemeinsam eine schmale Seitenwand bilden. Bei dieser Ausgestaltung bildet jede Seitenwand mit den damit verbundenen Seitenwandteilen eine Gehäuseschale und ist das Gehäuse aus den beiden Gehäuseschalen und der Bodenwand gebildet. Diese Ausgestaltung ist ebenfalls vorteilhaft für das Herstellen durch Spritzgießen.

Gemäß einer anderen Ausführungsart ist der einteilig mit den Spritzenzylindern ausgebildete Träger allein durch eine lineare Tragstruktur gebildet. Die lineare Tragstruktur ist beispielsweise eine Bodenwand eines Gehäuses. Die Bodenwand kann beispielsweise mit dem Gehäuse dadurch verbunden sein, dass zwei Gehäuseschalen mit Nuten oder Vorsprüngen an den Innenseiten für Ränder der Bodenwand unter Einfügung der Ränder der Bodenwand in die Nuten oder Vorsprünge zu einem Gehäuse zusammengesetzt werden. Im zusammengesetzten Zustand ist die Bodenwand im Gehäuse gehalten. Gemäß einer anderen Ausführungsart ist der lineare Träger über eine Verbindungsstruktur mit der Zylinderhalteeinrichtung verbunden, wobei die Verbindungsstruktur beispielsweise durch ein oder mehrere lineare Verbindungselemente oder einen Gitterrahmen zwischen Träger und Zylinderhalteeinrichtung gebildet ist. Diese Ausführungsart kommt ohne Gehäuse aus.

Gemäß einer weiteren Ausgestaltung ist der Träger einteilig mit der Zylinderhalteeinrichtung verbunden. Durch diese Ausgestaltung wird die Herstellung weiter vereinfacht. Die Herstellung kann vorteilhaft durch Spritzgießen erfolgen. Alternativ werden Zylinderhalteeinrichtung und Träger gesondert hergestellt und miteinander verbunden. Hierfür hat beispielsweise der Träger zwei Gehäuseschalen, die Nuten oder Vorsprünge an den Innenseiten aufweisen und zusammengesetzt werden können, wobei beim Zusammenfügen Ränder der Zylinderhalteeinrichtung von den Nuten oder Vorsprüngen aufgenommen und hierdurch die Zylinderhalteeinrichtung mit den Gehäuseschalen verbunden wird.

Gemäß einer bevorzugten Ausführungsart sind die Kolbenhalteeinrichtung und die Zylinderhalteeinrichtung so ausgebildet, wie bei der Spritze des Repetierpipettensystems gemäß EP 0 656 229 Blund der US 5,620,660A, sodass die Mehrkanalspritze mit der in der EP 0 656 229 B1 und der US 5,620,660A beschriebenen Repetierpipette des Repetierpipettensystems gebraucht werden kann. Gemäß einer weiteren Ausführungsart sind die Kolbenhalteeinrichtung und die Zylinderhalteeinrichtung der Mehrkanalspritze so ausgebildet, wie die Kolbenhalteeinrichtung und die Zylinderhalteeinrichtung der in der EP 2 279 791 B1 und der US 8,813,584 B2 beschriebenen Spritze, sodass die Mehrkanalspritze mit der in der EP 2 279 791 B1 und der US 8,813,584 B2 beschriebenen Dosiervorrichtung gebraucht werden kann. Hinsichtlich der Zylinderhalteeinrichtung und der Kolbenhalteeinrichtung wird Bezug genommen auf die Zylinderhalteeinrichtung und die Kolbenhalteeinrichtung der einfachen Spritzen aus der EP 0 656 229 B1, US 5,620,660A oder der EP 2 279 791 B1 und US 8,813,584 B2, deren Inhalt hiermit in diese Anmeldung aufgenommen wird.

Gemäß einer weiteren Ausführungsart weist die Zylinderhalteeinrichtung einen kreisringscheibenförmigen Flansch auf und ist die Antriebsstange auf der Mittelachse des Flansches angeordnet. Der Flansch kann an einem kreisringförmigen Anschlag der Dosiervorrichtung anliegen und daran von Greifeinrichtungen der Dosiervorrichtung festgehalten werden.

Der Flansch kann direkt mit dem oberen Rand des Gehäuses verbunden sein. Das Gehäuse kann am oberen Rand Aussparungen aufweisen, die ein Eingreifen des unteren Randes einer Dosiervorrichtung und Greifen des Flansches durch Greifeinrichtungen der Dosiervorrichtung ermöglichen.

Gemäß einer weiteren Ausführungsart weist die Zylinderhalteeinrichtung einen hohlzylindrischen Haltezapfen auf, ist die Antriebsstange auf der Mittelachse des Haltezapfens angeordnet und ist der Flansch mit dem oberen Ende des Haltezapfens verbunden. Der Haltezapfen erleichtert das Greifen des Flansches mittels Greifeinrichtungen der Dosiervorrichtung. Ferner ist ein Haltezapfen vorteilhaft für die Kraftüberleitung vom Flansch in das Gehäuse.

Gemäß einer weiteren Ausführungsart weist das Gehäuse oben eine zweite Verjüngung nach oben auf. Die zweite Verjüngung ist vorzugsweise an die Form einer dreiecksförmigen oder trapezförmigen Traverse angepasst werden, um diese beim Herausziehen der Kolbeneinheit aus der Zylindereinheit aufzunehmen. Sie begünstigt eine materialsparende Ausführung des Gehäuses.

Gemäß einer weiteren Ausführungsart weist die Zylinderhalteeinrichtung zwei Hälften auf, wobei jede Hälfte mit einer Seitenwand des Gehäuses verbunden ist und die beiden Hälften an diametral einander gegenüberliegenden Rändern aneinander anliegen. Diese Ausführungsart ist besonders vorteilhaft für die einteilige Ausbildung der Zylinderhalteeinrichtung mit einem Gehäuse. Beim Zusammenfügen der Gehäuseteile werden auch die Hälften der Zylinderhalteeinrichtung zusammengefügt. Dies vereinfacht die Herstellung.

Gemäß einer weiteren Ausführungsart sind die Seitenwände und/oder die Hälften der Zylinderhalteeinrichtung durch Rastelemente und/oder durch Heißverstemmung und/oder durch Verschweißung und/oder durch Verklebung und/oder durch Zentrierelemente miteinander verbunden. Bevorzugt sind die Seitenwände und/oder die Hälften der Zylinderhalteeinrichtung durch Rastelemente miteinander verbunden und/oder aufeinander ausgerichtet. Hierdurch wird die Herstellung vereinfacht. Vorteilhaft ist auch, dass die Verbindungselemente nicht besonders stabil sein müssen, weil die Gehäuseteile und/oder die Hälften der Zylinderhalteeinrichtung beim Gebrauch von der Dosiervorrichtung zusätzlich zusammengehalten werden.

Gemäß einer weiteren Ausführungsart weist die Zylinderhalteeinrichtung am oberen Rand eine Codierung auf. Die Mehrkanalspritze kann mit einer Codierung wie bei herkömmlichen einfachen Spritzen versehen werden, sodass die Dosiervorrichtung die Mehrkanalspritzen erkennen und beispielsweise die jeweils eingestellte Dosiermenge anzeigen kann. In dieser Hinsicht wird Bezug genommen auf die Codierung einer einfachen Spritze gemäß EP 0 657 216 B1 und US 5,620,661 A und auf die Codierung mit Prüfelementen einer einfachen Spritze gemäß EP 2 574 402 B1 und US 9,291,529 B2, deren Inhalt hiermit in diese Anmeldung aufgenommen wird.

Dadurch, dass die Spritzenkolben in den Spritzenzylinder der Mehrkanalspritze geführt sind, wird eine Ausrichtung der Kolbenhalteeinrichtung bezüglich der Zylinderhalteeinrichtung erreicht, die das Verbinden mit der ersten und der zweiten Halteeinrichtung einer Dosiervorrichtung erleichtert.

Gemäß einer weiteren Ausführungsart weist das Gehäuse an der Innenseite vorstehende, in axialer Richtung der Antriebsstange geschlitzte Stege auf, in die die Rippen der Antriebsstange eingreifen. Hierdurch wird eine zusätzlich Führung der Kolbeneinheit in axialer Richtung erreicht. Durch diese Führung wird die Genauigkeit der Ausrichtung der Kolbenhalteeinrichtung auf die zweite Halteeinrichtung einer Dosiervorrichtung verbessert.

Die Kolbenhalteeinrichtung kann allein durch das obere Ende der Antriebsstange gebildet sein. Diese weist beispielsweise ein Zylinderprofil oder ein Kastenprofil oder ein Kreuzprofil auf. Gemäß einer bevorzugten Ausführungsart ist die Kolbenhalteeinrichtung ein zylindrisches Kupplungsstück am oberen Ende der Antriebsstange.

Gemäß bevorzugter Ausführungsarten umfasst die Mehrkanalspritze 8, 12, 16, 24, 32, 96 oder 384 Spritzen. Dies ist vorteilhaft für das Dosieren von Flüssigkeiten unter Verwendung von Mikrotiterplatten mit 96 oder 384 Gefäßen. Gemäß einer weiteren Ausführungsart weisen die Spritzenzylinder die unteren Zylinderöffnungen der Spritzenzylinder einen Abstand voneinander auf, der dem Abstand zweier benachbarter Gefäße in einer definierten Richtung einer standardisierten Mikrotiterplatte (SBS-Standard) entspricht.

Gemäß einer weiteren Ausführungsart ist die Kolbeneinheit einteilig spritzgegossen und/oder ist die Zylindereinheit und/oder das Gehäuse und/oder die Zylinderhalteeinrichtung einteilig spritzgegossen.

Die Kolbeneinheit und/oder die Zylindereinheit und/oder das Gehäuse und/oder die Zylinderhalteeinrichtung ist jeweils aus einem Kunststoff oder aus mehreren Kunststoffen hergestellt.

Gemäß einer bevorzugten Ausführungsart sind die Kolbeneinheit und/oder die Zylindereinheit und/oder das Gehäuse und/oder die Zylinderhalteeinrichtung jeweils aus mindestens einem Polyolefin oder anderen Thermoplasten hergestellt. Gemäß einer bevorzugten Ausführungsart ist die Kolbeneinheit aus Polyethylen und die Zylindereinheit aus Polypropylen hergestellt oder umgekehrt. Hierdurch ergibt sich eine besonders gute Gleitpaarung zwischen Spritzenkolben und Spritzenzylindern.

Ferner betrifft die Erfindung die Verwendung der erfindungsgemäßen Mehrkanalspritze insbesondere gemäß einem der Ansprüche 1 bis 18 mit einer Dosiervorrichtung zum Dosieren von Flüssigkeiten im Labor mit einer ersten Halteeinrichtung für eine Zylinderhalteeinrichtung eines Spritzenzylinders und einer axial verlagerbaren, zweiten Halteeinrichtung für eine Kolbenhalteeinrichtung eines Spritzenkolbens.

Gemäß einer bevorzugten Ausführungsart wird die Mehrkanalspritze mit einer manuell angetriebenen oder einer elektromotorisch angetriebenen, handhabbaren oder stationären Dosiervorrichtung verwendet.

Die Mehrkanalspritze kann mit manuell angetriebenen Dispensern gebraucht werden, um die aufgenommenen Flüssigkeitsmengen in mehreren Schritten abzugeben. Ferner kann die Mehrkanalspritze mit elektromotorisch angetriebenen Dispensern gebraucht werden, mit denen die aufgenommenen Flüssigkeitsmengen in mehreren Dosierschritten oder in einem einfachen Dosierschritt insgesamt abgegeben werden können. Die Mehrkanalspritze kann mit handhabbaren Dosiervorrichtungen gebraucht werden, die beim Dosieren vom Anwender in einer Hand gehalten werden können. Ferner kann die Mehrkanalspritze mit stationären Dosiervorrichtungen gebraucht werden, insbesondere mit Dosierautomaten oder Laborautomaten. Bei diesen ist die zweite Halteeinrichtung elektromotorisch angetrieben, sodass sie sowohl eine Abgabe der aufgenommenen Flüssigkeitsmengen in mehreren Dosierschritten als auch in einem einzigen Dosierschritt ermöglichen. Die Dosiervorrichtung kann eine Dosiervorrichtung für den Gebrauch mit einer einfachen Spritze oder eine speziell für die Mehrkanalspritze ausgebildete Dosiervorrichtung sein.

In der vorliegenden Anmeldung beziehen sich die Angaben "oben" und "unten" sowie "oberhalb" und "unterhalb" sowie davon abgeleitete Begriffe auf eine Ausrichtung der Mehrkanalspritze mit vertikalen Spritzenkolben und Spritzenzylindern, wobei die unteren Spritzenöffnungen nach unten und die oberen Spritzenöffnungen nach oben gerichtet sind.

Die Erfindung wird nachfolgend anhand der anliegenden Zeichnungen eines Ausführungsbeispiels näher erläutert. In den Zeichnungen zeigen:
- Fig. 1a-d: eine Kolbeneinheit einer Mehrkanalspritze in einer Perspektivansicht schräg von vorn und von der Seite (Fig. 1a), Vorderansicht (Fig. 1b), Draufsicht (Fig. 1c) und Seitenansicht (Fig. 1d);
- Fig. 2a-d: eine einteilige Zylindereinheit der Mehrkanalspritze in aufgeklapptem Zustand in einer Perspektivansicht schräg von vorn und von der Seite (Fig. 2a), Vorderansicht (Fig. 2b), Draufsicht (Fig. 2c) und Seitenansicht (Fig. 2d);
- Fig. 3a-d: die Kolbeneinheit und die Zylindereinheit beim Zusammenfügen der Mehrkanalspritze in einer Perspektivansicht schräg von vorn und von der Seite (Fig. 3a), Vorderansicht (Fig. 3b), Draufsicht (Fig. 3c) und Seitenansicht (Fig. 3d);
- Fig. 4a-e: die Mehrkanalspritze in einer Perspektivansicht schräg von vorn und von der Seite (Fig. 4a), Vorderansicht (Fig. 4b), Draufsicht (Fig. 4c), Seitenansicht (Fig. 4d) und in einem Vertikalschnitt entlang der Achse 4e-4e von Fig. 4c (Fig. 4e);
- Fig. 5a-d: die Mehrkanalspritze verbunden mit einer elektronisch angetriebenen, handhabbaren Dosiervorrichtung in einer Perspektivansicht schräg von vorn und von der Seite (Fig. 5a), Vorderansicht (Fig. 5b), Seitenansicht der Mehrkanalspritze mit dem unteren Teil der Dosiervorrichtung (Fig. 5c) und Vertikalschnitt durch die Mehrkanalspritze und den unteren Teil der Dosiervorrichtung (Fig. 5d);
- Fig. 6a-b: die Mehrkanalspritze verbunden mit einer manuell angetriebenen, handhabbaren Dosiervorrichtung in einer Perspektivansicht schräg von vorn und von der Seite (Fig. 6a) und in Vorderansicht (Fig. 6b);
- Fig. 7: die Mehrkanalspitze verbunden mit einem Dosierautomaten in einer Perspektivansicht schräg von vorn und von der Seite.

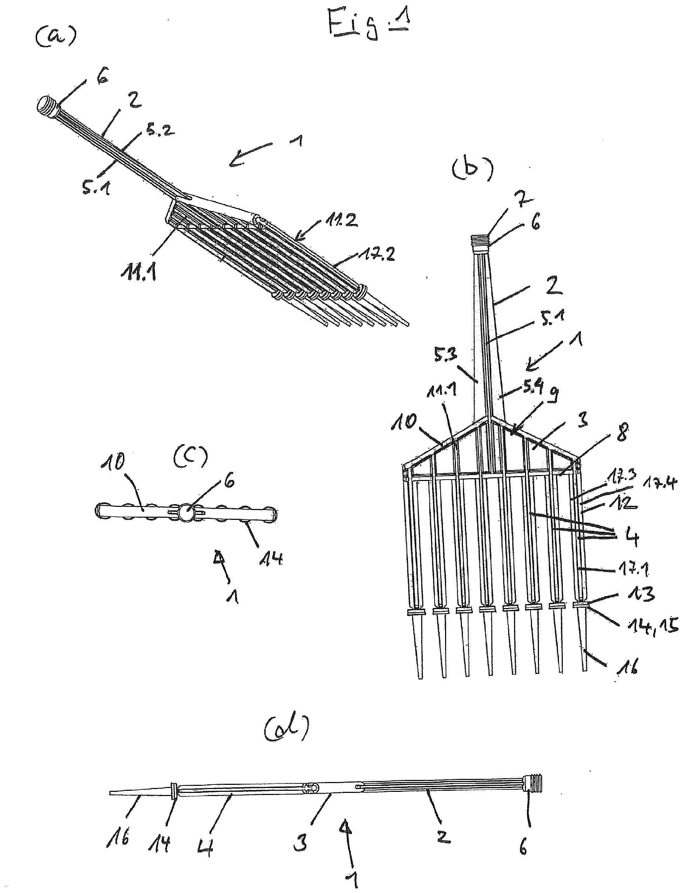

Gemäß Fig. 1 weist die Kolbeneinheit 1 eine Antriebsstange 2, eine Traverse 3 am unteren Ende der Antriebsstange 2 und mehrere von der Traverse 3 nach unten vorstehende, zur Antriebsstange 2 parallele Spritzenkolben 4 auf. Im Beispiel umfasst die Kolbeneinheit 1 acht Spritzenkolben 4.

Die Antriebsstange 2 weist ein Kreuzprofil mit Rippen 5.1, 5.2, 5.3, 5.4 auf. Die Antriebsstange 2 verjüngt sich von unten nach oben. Die Rippen 5.1, 5.2 haben einen in Längsrichtung konstanten, trapezförmigen Querschnitt. Die parallel zur Traverse gerichteten Rippen 5.3, 5.4 des T-Profils haben ebenfalls einen trapezförmigen Querschnitt. Ihre Höhe nimmt nach oben ab.

Am oben Ende der Antriebsstange 2 sitzt eine Kolbenhalteeinrichtung 6 in Form eines kreiszylindrischen Kupplungsstückes. Das Kupplungsstück 6 hat am Umfang mehrere umlaufende Rillen 7 für ein sicheres Greifen durch eine Dosiervorrichtung.

Die Traverse 3 ist plattenförmig, hat eine geradlinige, senkrecht zur Antriebsstange 2 gerichtete Basis 8 und eine erste Verjüngung nach oben mit einer dreiecksförmigen Kontur. Die beiden oberen geneigten Ränder weisen jeweils eine wulstartige Verstärkung 10 auf. Auf der Vorder- und Rückseite verlaufen mehrere parallel zu den Spritzenkolben 4 erstreckte, nach außen vorstehende Rippen 11.1, 11.2.

Jeder Spritzenkolben 4 hat eine Kolbenstange 12, die oben mit der Basis 8 der Traverse 3 verbunden ist. Unten ist jede Kolbenstange 12 mit einem tellerförmigen Kolben 13 verbunden. Jeder Kolben weist eine schürzenförmig nach unten vorstehende Dichtlippe 14 auf. Jede Dichtlippe 14 hat außen einen umlaufenden Dichtwulst 15.

Von der Unterseite jedes Kolbens 13 steht eine Kolbenspitze 16 vor, die sich konisch nach unten verjüngt.

Jede Kolbenstange 12 weist ein Kreuzprofil mit Rippen 17.1, 17.2, 17.3, 17.4 auf. Die senkrecht zur Traverse 3 gerichteten Rippen 17.1, 17.2 der Kreuzprofile setzen die Rippen 11.1, 11.2 auf der Außenseite der Traverse 3 nach unten fort.

Die Kolbeneinheit 1 ist aus einem einzigen Kunststoff spritzgegossen oder aus mehreren Kunststoffen in einem Mehrkomponenten-Spritzgießverfahren spritzgegossen. Vorzugsweise ist die Kolbeneinheit 1 einteilig spritzgegossen. Vorzugsweise ist die Kolbeneinheit 1 aus einem Polyolefin, bevorzugt aus Polyethylen spritzgegossen.

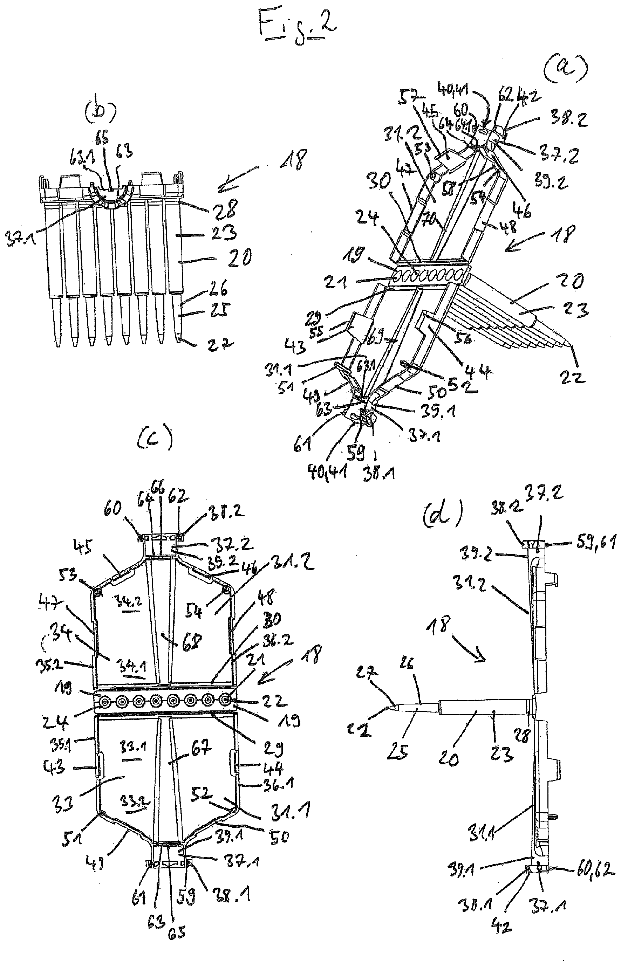

Gemäß Fig. 2 umfasst eine Zylindereinheit 18 eine streifenförmige Bodenwand 19 und eine Mehrzahl in einer Reihe parallel nebeneinander angeordnet, von der Bodenwand nach unten vorstehender Spritzenzylinder 20. Im Beispiel umfasst die Zylindereinheit 18 acht Spritzenzylinder 20. Jeder Spritzenzylinder 20 weist eine obere Spritzenöffnung 21 und eine untere Spritzenöffnung 22 auf. Die oberen Spritzenöffnungen 21 münden in der Oberseite der Bodenwand 19. Ferner hat jeder Spritzenzylinder 20 einen hohlzylindrischen, oberen Zylinderabschnitt 23 mit einem zylindrischen Laufbereich 24 für einen Spritzenkolben 4 und eine vom unteren Ende des oberen Zylinderabschnitts 23 vorstehende, hohle Zylinderspitze 25. Jede Zylinderspitze 25 hat zwei Konusabschnitte 26, 27, wobei der obere Konusabschnitt 26 einen geringeren Konuswinkel als der untere Konusabschnitt 27 und der untere Konusabschnitt 27 die untere Spritzenöffnung 22 aufweist. Zwischen jedem oberen Zylinderabschnitt 23 und der Bodenwand 19 ist eine kurze, nach oben sich erweiternde, konische Erweiterung 28 vorhanden.

An die beiden gegenüberliegenden Längsseiten der Bodenwand 19 sind über Filmscharniere 29, 30 Gehäuseschalen 31.1, 31.2 eines Gehäuses 32 angelenkt. Jede Gehäuseschale 31.1, 31.2 weist eine Seitenwand 33, 34 auf, die eine im Wesentlichen rechteckiges unteres Seitenwandteil 33.1, 34.1 und einem im Wesentlichen giebelförmiges oberes Seitenwandteil 33.2, 34.2 aufweist. Der untere Rand jeder Seitenwand 33, 34 ist über ein Filmscharnier 29, 23 mit der Bodenwand 19 verbunden.

Ferner weist jede Gehäuseschale 31.1, 31.2 an den äußeren Rändern der Seitenwände 33, 34 hochstehende schmale Seitenwandteile 35.1, 35.2, 36.1, 36.2 bzw. Schalenränder auf. Vom oberen Rand jeder Gehäuseschale 31.1, 31.2 steht mittig eine Hälfte einer Zylinderhalteeinrichtung 37 vor. Die Zylinderhalteeinrichtung 37 umfasst einen kreisringförmigen Flansch 38, von dem nach unten ein hohlzylindrischer Haltezapfen 39 vorsteht. Auf der Oberseite des Flansches 38 sind Codierelemente 40 und Prüfelemente 41 angeordnet, die jeweils durch Vorsprünge oder Vertiefungen gebildet sind. Der Flansch 38 weist am Umfang Führungsstrukturen 42 zum Ausrichten an weiteren Führungsstrukturen der Dosiervorrichtung auf.

Jede Gehäuseschale 31.1, 31.2 ist mit einer Hälfte 37.1, 37.2 der Zylinderhalteeinrichtung 37 verbunden, die durch einen Längsschnitt durch die Mittelachse der Zylinderhalteeinrichtung 37 gebildet ist.

Hinsichtlich der möglichen Ausgestaltung des kreisringförmigen Flansches 38 wird Bezug genommen auf den kreisringförmigen Flansch gemäß EP 2 574 402 B1, US 9,291,529 B2, EP 2 279 791 B1 und US 8,813,584, deren Inhalt hiermit in diese Anmeldung aufgenommen wird.

Von den Rändern der Gehäuseschale 31.1, 31.2 stehen Rastelemente 43 bis 46 in Form von Rasthaken vor. Jede Gehäuseschale 31.1, 31.2 weist aneinander gegenüberliegende Rändern zwei vorstehende Rasthaken 43 bis 46 auf und die jeweils andere Gehäuseschale 31.1, 31.2 hat seitlich zwei Rastnuten 47 bis 50 zur Aufnahme der Rasthaken 43 bis 46. Die eine Gehäuseschale 31.1 weist die Rasthaken 43, 44 im unteren, rechteckigen Abschnitt und die Rastnuten 49, 50 im oberen, giebelförmigen Abschnitt und die andere Gehäuseschale 31.2 weist die Rasthaken 45, 46 im oberen, giebelförmigen Abschnitt und die Rastnuten 47, 48 im unteren, rechteckigen Abschnitt auf.

Ferner stehen vom Rand einer Gehäuseschale 31.1 untere Zentrierstifte 51, 52 vor und weist die andere Gehäuseschale 31.2 untere Zentrierlöcher 53, 54 zur Aufnahme der Zentrierstifte 51, 52 auf. Die unteren Zentrierstifte 51, 52 und unteren Zentrierlöcher 53, 54 befinden sich jeweils an der Ecke zwischen dem unteren, rechteckigen Abschnitt 34.1, 33.1 und dem oberen, giebelförmigen Abschnitt 34.2, 33.2 einer Gehäuseschale 31.1, 31.2.

Jeder Rasthaken 43 bis 46 hat am Ende einen nach innen vorstehenden Rastvorsprung 55 bis 58.

Schließlich weist jede Flanschhälfte 38.1, 38.2 des kreisringscheibenförmigen Flansches 38 in der Trennebene einen vorstehenden oberen Zentrierstift 59, 60 und ein oberes Zentrierloch 61, 62 auf, wobei der obere Zentrierstift 59, 60 der einen Flanschhälfte 38.1, 38.2 auf der Seite des oberen Zentrierloches 61, 62 der anderen Flanschhälfte 38.1, 38.2 angeordnet ist und umgekehrt.

Jede Gehäuseschale 31.1, 31.2 hat am unteren Ende der Zapfenhälfte 39.1, 39.2 des Haltezapfens 39 einen vorstehenden Steg 63, 64, der den Querschnitt der Zapfenhälfte 39.1, 39.2 teilweise versperrt. Jeder Steg 63, 64 weist am Rand im Zentrum einer wannenförmigen Vertiefung 63.1, 64.1 einen axial gerichteten Schlitz 65, 66 auf. Die Rippen 5.3, 5.4 der Antriebsstange können in die Vertiefungen 63.1, 64.1 und die Rippen 5.1, 5.2 in die Schlitze 65, 66 eingreifen.

Die Zylindereinheit 18 ist vorzugsweise einteilig aus einem einzigen Kunststoff spritzgegossen oder aus mehreren Kunststoffen im Mehrkomponenten-Spritzgießverfahren spritzgegossen. Vorzugsweise ist die Spritzeneinheit aus Polyolefin, bevorzugt aus Polypropylen spritzgegossen.

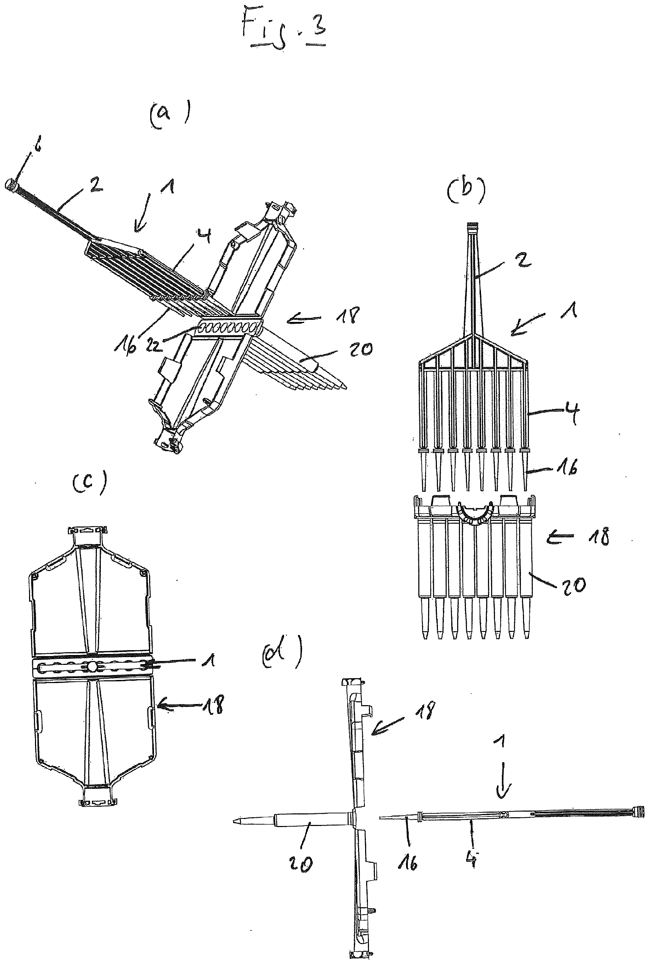

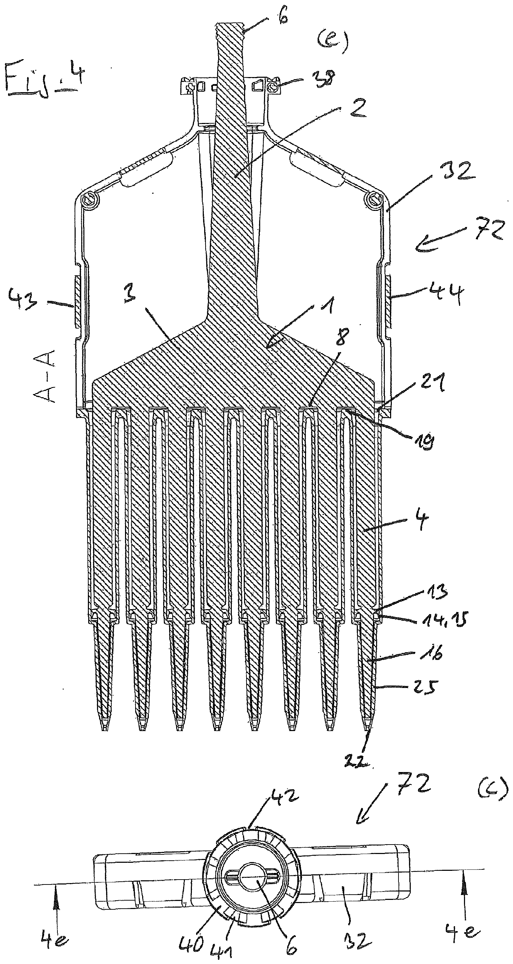

Gemäß Fig. 3 wird die Kolbeneinheit 1 mit der Zylindereinheit 18 zusammengesetzt, in dem die Spritzenkolben 4 mit den Kolbenspitzen 16 auf die oberen Spritzenöffnungen 21 der Spritzenzylinder 20 ausgerichtet werden. Danach werden die Spritzenkolben 4 in die Spritzenzylinder 20 eingeschoben. bis die Unterseite der Traverse 3 an der Oberseite der Bodenwand 19 anliegt. In dieser Stellung stoßen die Dichtlippen 14 der Spritzenkolben 4 gerade noch nicht gegen den Absatz am unteren Ende des Laufbereiches 24 und ist noch ein kleiner Spalt zwischen den Kolbenspitzen 16 und den Zylinderspitzen 25 vorhanden. Dies ist in Fig. 4 (e) gezeigt.

Das Einführen der Dichtlippen 14 in die Laufbereiche 24 wird durch die Erweiterungen 28 erleichtert.

Jede Gehäuseschale 31.1, 31.2 weist auf der Außenseite in Fortsetzung der Zapfenhälfte 39.1, 39.2 des Haltezapfens 39 eine sich bis kurz vor das Filmscharnier 29, 30 erstreckenden Zylinderauslauf 67, 68 auf, dessen Breite und Höhe nach unten abnimmt. Der Zylinderauslauf 67, 68 geht oben glatt in die Außenkontur der Zapfenhälfte 39.1, 39.2 über. Auf der Innenseite hat jede Gehäuseschale 31.1, 31.2 eine innere Längsrippe 69, 70, die sich vom Steg 63, 64 aus bis kurz vor das Filmscharnier 29, 30 erstreckt. Die Breite und Höhe der inneren Längsrippe 69, 70 nimmt nach unten ab.

Danach werden die Gehäuseschalen 31.1, 31.2 zusammengeklappt, wobei jeweils die Rasthaken 43 bis 46 der einen Gehäuseschale 31.1, 31.2 in die Rastnuten 47 bis 50 der anderen Gehäuseschale 31.1, 31.2 eintauchen, bis die Rastvorsprünge 55 bis 58 die Seitenwand 33, 34 der anderen Gehäuseschale 31.1, 31.2 randseitig übergreifen. Ferner werden beim Zusammenklappen die Zentrierstifte 51, 52, 59, 60 der einen Gehäuseschale 31.1, 31.2 jeweils in eine Zentrierloch 53, 54, 61, 62 der anderen Gehäuseschale 31.1, 31.2 eingefügt. Die schmalen Seitenwandteile 35.1, 35.2 bilden zusammengefügt eine schmale Seitenwand 35 und die schmalen Seitenwandteile 36.1, 36.2 bilden zusammengefügt eine schmale Seitenwand 36 des Gehäuses 32.

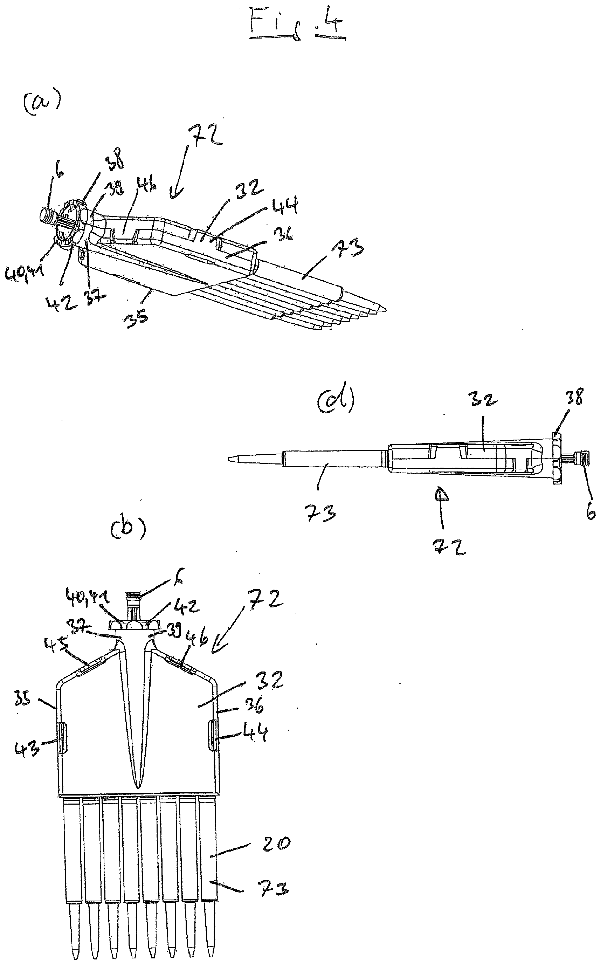

Fig. 4 zeigt die durch Verrasten der Gehäuseschalen 31.1, 31.2 zu einem Gehäuse 32 für die Spritzenzylinder fertig konfektionierte Mehrkanalspritze 72. Die Mehrkanalspritze 72 umfasst im Beispiel acht Spritzen 73.

Das Gehäuse 32 ist zugleich ein Träger 71 der Zylindereinheit 18, von dem die Spritzenzylinder 20 nach unten vorstehen.

Vorzugsweise ist die Mehrkanalspritze 72 ein Einwegteil (*disposable*).

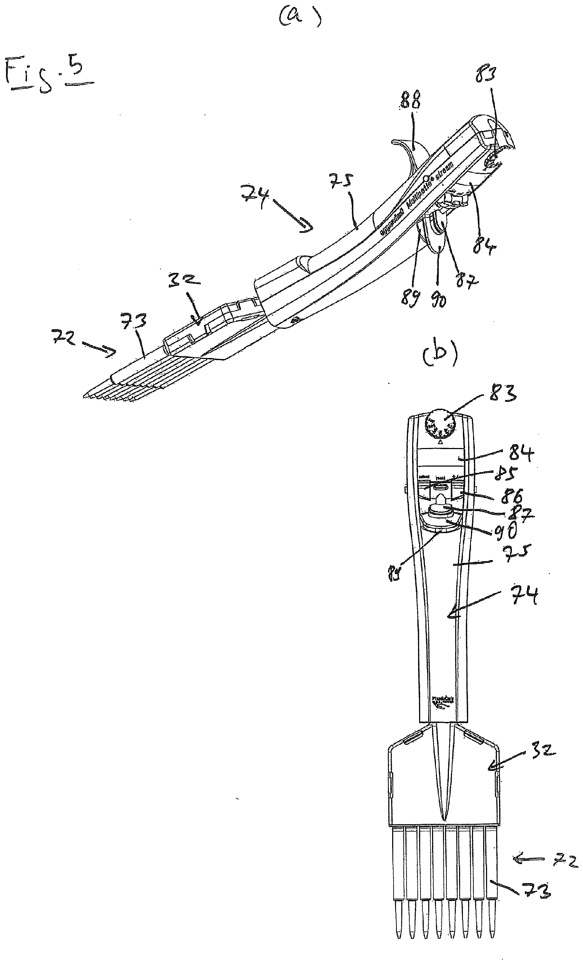

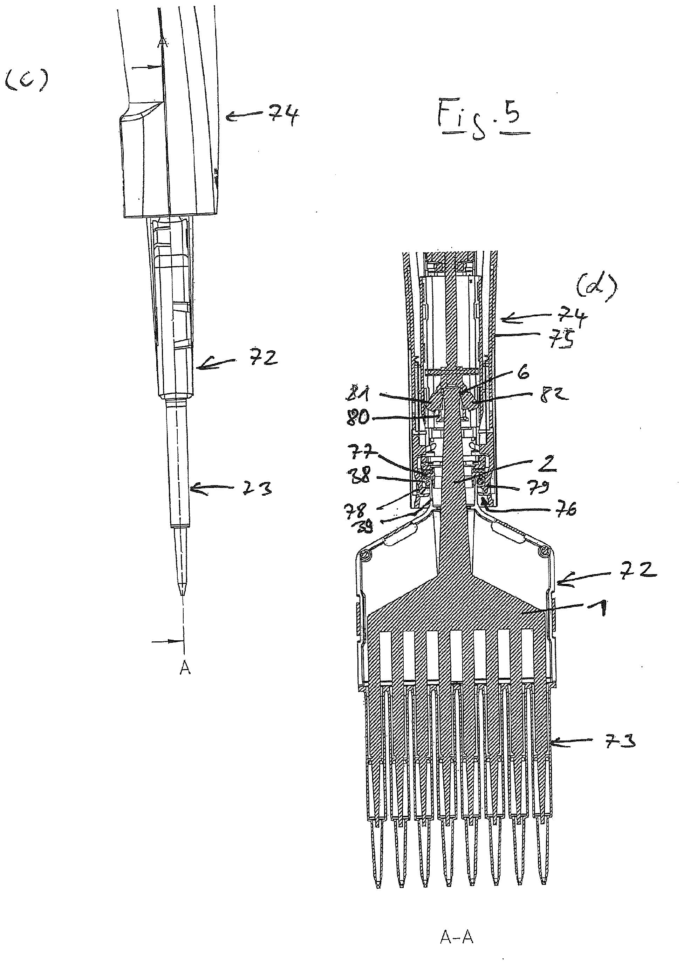

Gemäß Fig. 5 ist die Mehrkanalspritze 72 am unteren Ende einer Dosiervorrichtung 74 gehalten. Die Dosiervorrichtung 74 ist im Beispiel ein Dispenser mit elektromotorischem Antrieb für die Spritzenkolben 4. Hierbei handelt es sich um einen Handdispenser, d.h. einen Dispenser, der vom Anwender beim Dosieren in einer Hand gehalten werden kann. In der Zeichnung gezeigt ist der elektronische Dispenser Multipette® E3 der Eppendorf AG.

Die Dosiervorrichtung 74 hat ein im Wesentlichen stangenförmiges Gerätegehäuse 75.

Am unteren Ende hat das Gerätegehäuse 75 eine Aufnahme 76 in die wahlweise eine herkömmliche Spritze oder eine erfindungsgemäße Mehrkanalspritze 72 mit dem kreisringförmigen Flansch 38 eingesetzt werden kann. Der kreisringförmige Flansch 38 wird in der Aufnahme 76 an einem kreisringförmigen Anschlag 77 mittels Spritzengreifhebeln 78, 79 fixiert.

Ferner ist in der Aufnahme 76 eine axial verschiebbare Kolbenaufnahme 80 vorhanden, in die eine einfache Spritze oder die erfindungsgemäße Mehrkanalspritze 72 mit dem Kupplungsstück 6 einsetzbar ist.

Beim Einsetzen in die Kolbenaufnahme 80 wird das Kupplungsstück 6 von Kolbengreifhebeln 81, 82 gegriffen.

Einzelheiten möglicher Haltemechaniken der Dosiervorrichtung sind in der EP 0 656 229 B1, US 5 620 660A, EP 2 279 791 B1 und US 8,813,584 B2 beschrieben, deren Inhalt hiermit in dieser Anmeldung aufgenommen wird.

Die Dosiervorrichtung 74 weist oben ein Wahlrad 83 für die Auswahl des Betriebsmodus auf, der unter anderem die Wahl der Betriebsmodi Dispensieren und Pipettieren ermöglicht.

Ferner hat die Dosiervorrichtung 74 oben ein großes Display 84, das insbesondere die eingestellten Dosiervolumina angibt.

Darunter hat die Dosiervorrichtung 74 zwei Wippschalter 85, 86 zum Einstellen verschiedener Dosierparameter.

Eine Auslösetaste 87 dient zum Auslösen von Ansaug- und Dispensier- oder Pipettierschritten sowie zum Speichern von Parametereinstellungen.

Auf der Rückseite hat die Dosiervorrichtung 74 eine Handauflage 88 für das sichere und bequeme Halten der Dosiervorrichtung 74.

Ein Abwerfer 89 mit einer Abwerfertaste 90 am oberen Ende ermöglicht einen Einhand-Abwurf von einfachen Spritzen sowie der erfindungsgemäßen Mehrkanalspritze 72.

Die zum Befestigen der Mehrkanalspritze 72 und Lösen der Mehrkanalspritze 72 von der Dosiervorrichtung 74 aufzubringenden Kräfte entsprechen den Kräften zum Befestigen und Lösen einer einfachen Spritze. Die Dosiervorrichtung 74 kann bei geeigneter Programmierung mit Hilfe der Codierung der Mehrkanalspritze 72 den Typ der eingesetzten Mehrkanalspritze 72 erkennen und das Display 84 entsprechend steuern.

Aufgrund des geringen Gewichtes der Mehrkanalspritze 72 ist die Dosiervorrichtung 74 auch mit der daran befestigten Mehrkanalspritze 72 sehr gut handhabbar.

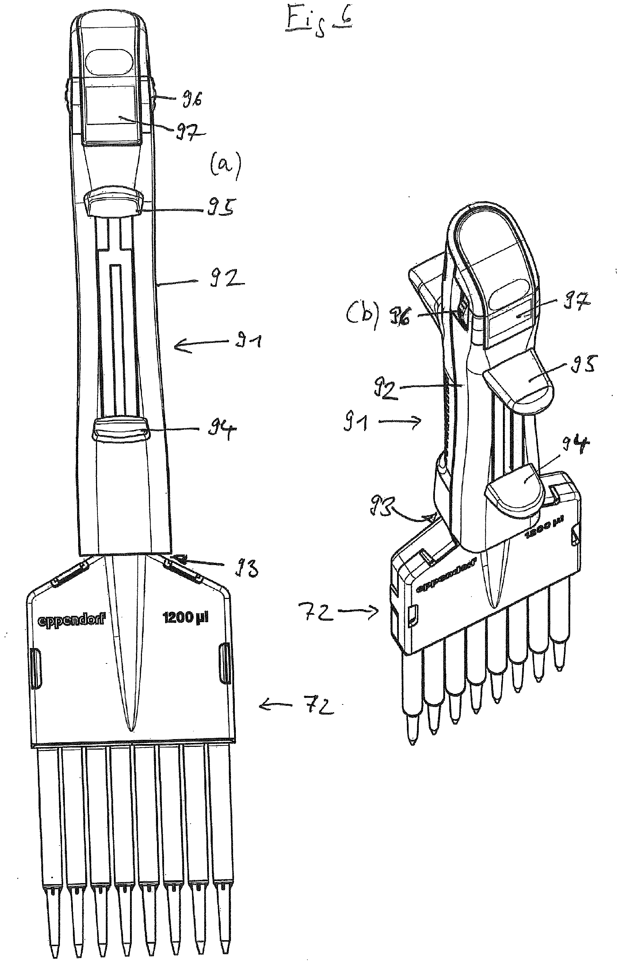

Gemäß Fig. 6 ist die Mehrkanalspritze 72 am unteren Ende einer Dosiervorrichtung 91 gehalten, die ein manuell angetriebener Dispenser ist. Hierbei handelt es sich ebenfalls um einen Handdispenser, der vom Anwender beim Dosieren in einer Hand gehalten werden kann. Im Beispiel gezeigt ist der manuelle Dispenser Multipette®M4 der Eppendorf AG.

Die Dosiervorrichtung 91 hat ein im Wesentlichen stangenförmiges Gerätegehäuse 92. Dieses hat am unteren Ende eine Aufnahme 93, in der wahlweise eine herkömmliche Spritze oder eine erfindungsgemäße Mehrkanalspritze 72 mit dem kreisringförmigen Flansch 38 eingesetzt werden kann. Der kreisringförmige Flansch 38 wird in der Aufnahme 92 an einem kreisringförmigen Anschlag mittels Spritzengreifhebeln fixiert.

Ferner ist in der Aufnahme 92 eine axial verschiebbare Kolbenaufnahme, in die eine einfache Spritze oder die erfindungsgemäße Mehrkanalspritze 72 mit dem Kupplungsstück 6 einsetzbar ist.

Beim Einsetzen in die Kolbenaufnahme wird das Kupplungsstück 6 von Kolbengreifhebeln gegriffen.

Einzelheiten möglicher Haltemechanik in der Dosiervorrichtung sind in den Patentveröffentlichungen beschrieben, die zur Dosiervorrichtung gemäß Fig. 5 angegeben sind.

Die Dosiervorrichtung 91 weist an der Vorderseite des Gehäuses 92 einen Aufziehhebel 94 und einen Dispensierhebel 95 auf. Am oberen Ende des Gehäuses 92 befindet sich ein Wahlrad 96, das beidseitig etwas aus dem Gehäuse 92 heraussteht und mit dem die Dispensierschrittweite und damit das Dispensiervolumen eingestellt werden kann.

Ferner hat das Gehäuse 92 am oberen Ende auf derselben Seite, auf der sich der Aufziehhebel 94 und der Dispensierhebel 95 befinden, ein Display 97. Das Display 97 zeigt in Abhängigkeit von der Codierung der jeweils eingesetzten Spritze bzw. Mehrkanalspritze 72 für jede Einstellung des Wahlrades 96 die Dosiermenge jedes Dosierschrittes an.

Mittels des Aufziehhebels 94 wird Flüssigkeit in sämtliche Spritzen (Kanäle) der Mehrkanalspritze 72 eingesogen. Durch Betätigen des Dispensierhebels 95 wird schrittweise Flüssigkeit abgegeben, bis keine Flüssigkeit mehr in den Spritzen ist bzw. die in den Spritzen vorhandene Restmenge nicht mehr für die eingestellte Dosiermenge ausreicht.

Dieser Anwendung kommen die zu Fig. 5 genannten Vorteile zu. Insbesondere ist das geringe Gewicht der Mehrkanalspritze 72 von Vorteil.

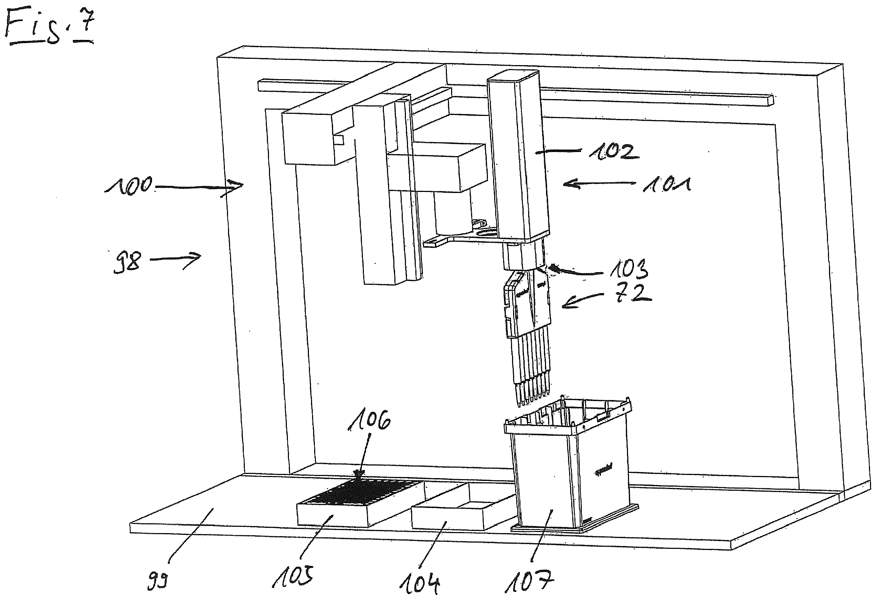

Schließlich zeigt Fig. 7 die Anwendung einer Mehrkanalspritze 72 in einem Laborautomaten 98. Dieser hat eine Arbeitsplatte 99, über der mittels eines elektromotorisch angetriebenen XYZ-Übertragungssystems 100 eine elektromotorisch angetriebene Dosiervorrichtung 101 verfahrbar ist.

Die Dosiervorrichtung 101 hat ein stangenförmiges Gerätegehäuse 102 mit Kastenquerschnitt, das am unteren Ende eine Aufnahme 103 für eine herkömmliche Spritze oder eine erfindungsgemäße Mehrkanalspritze 72 aufweist. Der kreisringförmige Flansch 38 wird in der Aufnahme an einem kreisringförmigen Anschlag mittels Spritzengreifhebeln fixiert.

In der Aufnahme 103 ist eine Kolbenaufnahme verschiebbar angeordnet, die von einem elektromotorischen Antrieb angetrieben ist. In die Kolbenaufnahme ist eine einfache Spritze oder die erfindungsgemäße Mehrkanalspritze 72 mit dem Kupplungsstück 6 einsetzbar. Beim Einsetzen in die Kolbenaufnahme wird das Kupplungsstück 6 von Kolbengreifhebeln gegriffen.

Einzelheiten möglicher Haltemechaniken der Dosiervorrichtung 101 sind wiederum in den obigen Patentschriften beschrieben, die zur Dosiervorrichtung 74 von Fig. 5 genannt sind.

Auf der Arbeitsplatte 99 sind beispielhaft ein Behälter 104 für Reagenzien, eine Mikrotiterplatte 105 mit Vertiefungen 106 an der Oberseite zur Aufnahme von Flüssigkeit und ein Behälter 107 zum Bereitstellen oder Abgeben von Mehrkanalspritzen 72 vorhanden. Mittels des XYZ-Übertragungssystems 100 ist die Dosiervorrichtung 101 so verfahrbar, dass sie auf der Arbeitsplatte 99 Mehrkanalspritzen 72 aufnehmen und abgeben kann und in aufgenommene Mehrkanalspritzen 72 Flüssigkeit aufnehmen und an Mikrotiterplatten 106 oder andere Behälter 104 abgeben kann.

Bei dieser Anwendung sind insbesondere das geringe Gewicht und die geringen Aufsteck- und Abwurfkräfte vorteilhaft.

### Bezugszeichenliste:

- 1: Kolbeneinheit
- 2: Antriebsstange
- 3: Traverse
- 4: Spritzenkolben
- 5.1, 5.2 5.3, 5.4: Rippen
- 6: Kolbenhalteeinrichtung
- 7: Rillen
- 8: Basis
- 9: Verjüngung
- 10: Verstärkung
- 11.1, 11.2: Rippen
- 12: Kolbenstange
- 13: Kolben
- 14: Dichtlippen
- 15: Dichtwulst
- 16: Kolbenspitze
- 17.1, 17.2, 17.3, 17.4: Rippen
- 18: Zylindereinheit
- 19: Bodenwand
- 20: Spritzenzylinder
- 21: obere Spritzenöffnung
- 22: untere Spritzenöffnung
- 23: Zylinderabschnitt
- 24: Laufbereich
- 25: Zylinderspitze
- 26, 27: Konusabschnitte
- 28: Erweiterung
- 29, 30: Filmscharnier
- 31.1, 31.2: Gehäuseschale
- 32: Gehäuse
- 33, 34: Seitenwand
- 33.1, 34.1: unteres Seitenwandteil
- 33.2, 34.2: oberes Seitenwandteil
- 35, 36: schmales Seitenwandteil
- 37: Zylinderhalteeinrichtung
- 37.1, 37.2: Hälfte der Zylinderhalteeinrichtung
- 38: Flansch
- 38.1,38.2: Flanschhälfte
- 39: hohlzylindrischer Haltezapfen
- 39.1,39.2: Zapfenhälfte
- 40: Codierelement
- 41: Prüfelement
- 42: Führungsstruktur
- 43, 44, 45, 46: Rasthaken
- 47, 48, 49, 50: Rastnut
- 51, 52: unterer Zentrierstift
- 53, 54: unteres Zentrierloch
- 55, 56, 57 58: Rastvorsprung
- 59, 60: oberer Zentrierstift
- 61, 62: oberes Zentrierloch
- 63, 64: Steg
- 63.1, 64.1: wannenförmige Vertiefung
- 65, 66: Schlitz
- 67, 68: Zylinderauslauf
- 69, 70: innere Längsrippe
- 71: Träger
- 72: Mehrkanalspritze
- 73: Spritze
- 74: Dosiervorrichtung
- 75: Gerätegehäuse
- 76: Aufnahme
- 77: kreisringförmiger Anschlag
- 78, 79: Spritzengreifhebel
- 80: Kolbenaufnahme
- 81, 82: Kolbengreifhebel
- 83: Wahlrad
- 84: Display
- 85, 86: Wippschalter
- 87: Auslösetaste
- 88: Handauflage
- 89: Abwerfer
- 90: Abwerfertaste
- 91: Dosiervorrichtung
- 92: Gerätegehäuse
- 93: Aufnahme
- 94: Aufziehhebel
- 95: Dispensierhebel
- 96: Wahlrad
- 97: Display
- 98: Laborautomat
- 99: Arbeitsplatte
- 100: XYZ-Übertragungssystem
- 101: Dosiervorrichtung
- 102: Gerätegehäuse
- 103: Aufnahme
- 104: Behälter
- 105: Mikrotiterplatte
- 106: Vertiefung
- 107: Behälter

## Patentansprüche

1. Mehrkanalspritze arbeitend als Direktverdränger für den Gebrauch mit einer Dosiervorrichtung (72) zum Dosieren von Flüssigkeiten im Labor mit einer ersten Halteeinrichtung für eine Zylinderhalteeinrichtung (37) eines Spritzenzylinders und einer axial verlagerbaren zweiten Halteeinrichtung für eine Kolbenhalteeinrichtung (6) eines Spritzenkolbens umfassend
• eine einteilige Kolbeneinheit (1) aus Kunststoff, die eine Antriebsstange (2) mit der Kolbenhalteeinrichtung (6) am oberen Ende, eine senkrecht zur Antriebsstange gerichtete Traverse (3) am unteren Ende der Antriebsstange (2) und mehrere von der Traverse (3) nach unten vorstehende, zur Antriebsstange (2) parallele Spritzenkolben (4) aufweist,
• eine einteilige Zylindereinheit (18) aus Kunststoff umfassend einen Träger (71) und mindestens eine Reihe parallel nebeneinander angeordneter, vom Träger (71) nach unten vorstehender Spritzenzylinder (20), die jeweils untere Spritzenöffnungen (22), obere Spitzenöffnungen (21) und im Inneren einen zylindrischen Laufbereich (24) für einen Spitzenkolben (4) der Kolbeneinheit (1) haben,
• wobei jeder Spritzenkolben (4) durch eine obere Spritzenöffnung (21) hindurch in einen Spritzenzylinder (20) eingreift und abdichtend im Laufbereich (24) geführt ist und
• die Zylinderhalteeinrichtung (37) oberhalb der Spritzenzylinder (20) angeordnet ist, und mit dem Träger (71) verbunden ist.

2. Mehrkanalspritze nach Anspruch 1, bei der die Traverse (3) plattenförmig ist, eine geradlinige, senkrecht zur Antriebsstange (2) gerichtete Basis (8) aufweist, von der die Spritzenkolben (4) nach unten vorstehen, oben eine erste Verjüngung (9) hat, wobei die Antriebsstange (2) vom oberen Ende der Traverse (3) nach oben vorsteht.

3. Mehrkanalspritze nach Anspruch 1 oder 2, bei der jeder Spritzenkolben (4) eine Kolbenstange (12) aufweist, die oben mit der Traverse (3) und unten mit einem Kolben (13) verbunden ist, der abdichtend im Laufbereich (24) geführt ist.

4. Mehrkanalspritze nach einem der Ansprüche 1 bis 3, bei der jeder Spritzenkolben (4) am unteren Ende eine Kolbenspitze (16) aufweist und jeder Spritzenzylinder (20) am unteren Ende eine Zylinderspitze (25) aufweist, in die die Kolbenspitze (16) einschiebbar ist.

5. Mehrkanalspritze nach einem der Ansprüche 1 bis 4, bei der die Traverse (3) und/oder die Antriebsstange (2) und/oder die Kolbenstangen (12) parallel zu den Spritzenkolben (4) erstreckte, nach außen vorstehende Rippen (11.1, 11.2, 5.1 bis 5.4, 17.1 bis 17.4) aufweisen.

6. Mehrkanalspritze nach einem der Ansprüche 1 bis 5, bei der der Träger (71) eine Bodenwand (19) eines Gehäuses (32) umfasst, die einteilig mit den Spritzenzylindern (20) ausgebildet ist, und das Gehäuse (32) von der Bodenwand (19) nach oben vorstehende Seitenwände (33, 34) aufweist, die mit der Zylinderhalteeinrichtung (37) verbunden ist.

7. Mehrkanalspritze nach Anspruch 6, bei der der Träger (71) das Gehäuse (32) umfasst.

8. Mehrkanalspritze nach Anspruch 6 oder 7, bei der die Bodenwand (19) an zwei einander gegenüberliegenden Längsseiten über Filmscharniere (29, 30) einteilig mit den Seitenwänden (33, 34) verbunden ist, mindestens eine Seitenwand (33, 34) oben mit der Zylinderhalteeinrichtung (37) verbunden ist, die Seitenwände (33, 34) um die Filmscharniere (29, 30) zusammengeklappt sind und die zusammengeklappten Seitenwände (33, 34) miteinander verbunden sind.

9. Mehrkanalspritze nach Anspruch 8, bei der die Seitenwände (33, 34) an ihren beiden seitlichen Rändern vorstehende schmale Seitenwandteile (35, 36) aufweisen, wobei jeweils zwei schmale Seitenwandteile (35, 36) der zusammengeklappten Seitenwände (33, 34) gemeinsam eine schmale Seitenwand bilden.

10. Mehrkanalspritze nach einem der Ansprüche 1 bis 9, bei der der Träger (71) einteilig mit der Zylinderhalteeinrichtung (37) verbunden ist.

11. Mehrkanalspritze nach einem der Ansprüche 1 bis 10, bei der die Zylinderhalteeinrichtung (37) einen kreisringscheibenförmigen Flansch (38) aufweist, und die Antriebsstange (2) auf der Mittelachse des Flansches (38) angeordnet ist.

12. Mehrkanalspritze nach Anspruch 11, bei der die Zylinderhalteeinrichtung (37) einen hohlzylindrischen Haltezapfen (39) aufweist, die Antriebsstange (2) auf der Mittelachse des Haltezapfens (39) angeordnet ist, und der Flansch (38) mit dem oberen Ende des Haltezapfens (39) verbunden ist.

13. Mehrfachspritze nach einem der Ansprüche 8 bis 12, bei der die Zylinderhalteeinrichtung (37) zwei Hälften (37.1, 37.2) aufweist, wobei jede Hälfte (37.1, 37.2) mit einer Seitenwand (33, 34) des Gehäuses (32) verbunden ist und die beiden Hälften (37.1, 37.2) an diametral einander gegenüberliegenden Rändern aneinander anliegen.

14. Mehrfachspritze nach einem der Ansprüche 6 bis 13, bei der das Gehäuse (32) oben eine zweite Verjüngung (33.2, 34.2) aufweist.

15. Mehrkanalspritze nach einem der Ansprüche 8 bis 14, bei der die Seitenwände (33, 34) und/oder die Hälften (37.1, 37.2) der Zylinderhalteeinrichtung (37) durch Rastelemente (43 bis 46 und 47 bis 50) und/oder durch Heißverstemmung und/oder durch Verschweißung und/oder durch Verklebung und/oder durch Zentrierelemente (51, 52, 59, 60; 53, 54, 61, 62) miteinander verbunden und/oder aufeinander ausgerichtet sind.

16. Mehrkanalspritze nach einem der Ansprüche 1 bis 15, bei der Zylinderhalteeinrichtung (37) am oberen Rand eine Codierung (40) aufweist.

17. Mehrkanalspritze nach einem der Ansprüche 6 bis 16, bei der das Gehäuse (32) an der Innenseite vorstehende, in axialer Richtung geschlitzte Stege (63, 64) aufweist, in die Rippen (5.1, 5.2) der Antriebsstange (2) eingreifen.

18. Mehrkanalspritze nach einem der Ansprüche 1 bis 17, bei der die Kolbeneinheit (1) einteilig spritzgegossen ist und/oder bei der die Zylindereinheit (18) und/oder das Gehäuse (32) und/oder die Zylinderhalteeinrichtung (37) einteilig spritzgegossen ist/sind.

19. Verwendung einer Mehrkanalspritze (72) gemäß einem der Ansprüche 1 bis 18 mit einer Dosiervorrichtung (74) zum Dosieren von Flüssigkeiten im Labor mit einer ersten Halteeinrichtung (76) für eine Zylinderhalteeinrichtung (37) eines Spritzenzylinders und einer axial verlagerbaren, zweiten Halteeinrichtung (80) für eine Kolbenhalteeinrichtung (6) eines Spritzenkolbens.

20. Verwendung nach Anspruch 19, mit einer manuell angetriebenen oder einer elektromotorisch angetriebenen, handhabbaren oder stationären Dosiervorrichtung (74).

## Claims

1. A multichannel syringe functioning as a positive displacer for use with a metering device (72) for metering liquids in a laboratory and having a first holding apparatus for a barrel holding apparatus (37) of a syringe barrel and an axially movable second holding apparatus for a plunger holding apparatus (6) of a syringe plunger, comprising:
• a one-part plunger unit (1) made of plastic that has a drive rod (2) with the plunger holding apparatus (6) at the top end, a crossmember (3), perpendicular to the drive rod, at the bottom end of the drive rod (2), and a plurality of syringe plungers (4) parallel to the drive rod (2) and projecting downward from the crossmember (3),
• a one-part barrel unit (18) made of plastic comprising a carrier (71) and at least one row of syringe barrels (20) projecting downward from the carrier (71) and arranged parallel next to each other which each have bottom syringe openings (22), top syringe openings (21), and a cylindrical travel region (24) in the interior for a syringe plunger (4) of the plunger unit (1),
• wherein each syringe plunger (4) engages in a syringe barrel (20) through a top syringe opening (21) and is sealingly guided in the travel region (24), and
• the barrel holding apparatus (37) is arranged above the syringe barrel (20) and is connected to the carrier (71).

2. The multichannel syringe according to claim 1, wherein in the crossmember (3) is plate-shaped, has a linear base (8) oriented perpendicular to the drive rod (2) from which the syringe plungers (4) project downward, and has a first tapering (9) at the top, wherein the drive rod (2) projects upward from the top end of the crossmember (3).

3. The multichannel syringe according to claim 1 or 2, wherein each syringe plunger (4) has a plunger rod (12) that is connected at the top to the crossmember (3) and at the bottom to a plunger (13) which is sealingly guided in the running region (24).

4. The multichannel syringe according to one of claims 1 to 3, wherein each syringe plunger (4) has a plunger tip (16) on the bottom end, and each syringe barrel (20) has a barrel tip (25) on the bottom end into which the plunger tip (16) can be inserted.

5. The multi-channel syringe according to one of claims 1 to 4, wherein the crossmember (3), and/or the drive rod (2), and/or the plunger rods (12) have ribs (11.1, 11.2, 5.1 to 5.4, 17.1 to 17.4) that project outward and extend parallel to the syringe plunger (4).

6. The multichannel syringe according to one of claims 1 to 5, wherein the carrier (71) comprises a bottom wall (19) of a housing (32) that is formed integrally with the syringe barrels (20), and the housing (32) has side walls (33, 34) that project upward from the bottom wall (19) and are connected to the barrel holding apparatus (37).

7. The multichannel syringe according to claim 6, wherein the carrier (71) comprises the housing (32).

8. The multichannel syringe according to claim 6 or 7, wherein the bottom wall (19) is connected integrally by means of film hinges (29, 30) to the side walls (33, 34) on two longitudinal sides that oppose each other, at least one side wall (33, 34) is connected at the top to the barrel holding apparatus (37), the side walls (33, 34) are folded on the film hinges (29, 30), and the folded side walls (33, 34) are connected to each other.

9. The multichannel syringe according to claim 8, wherein the side walls (33, 34) have narrow side wall parts (35, 36) that project on their two lateral edges, wherein each of the two narrow side wall parts (35, 36) of the folded side walls (33, 34) jointly form a narrow side wall.

10. The multichannel syringe according to one of claims 1 to 9, wherein the carrier (71) is connected integrally to the barrel holding apparatus (37).

11. The multichannel syringe according to one of claims 1 to 10, wherein the barrel holding apparatus (37) has an annular disc-shaped flange (38), and the drive rod (2) is arranged on the middle axis of the flange (38).

12. The multichannel syringe according to claim 11, wherein the barrel holding apparatus (37) has a hollow cylindrical retaining pin (39), the drive rod (2) is arranged on the middle axis of the retaining pin (39), and the flange (38) is connected to the top end of the retaining pin (39).

13. The multichannel syringe according to one of claims 8 to 12, wherein the cylinder holding apparatus (37) has two halves (37.1, 37.2), wherein each half (37.1, 37.2) is connected to a side wall (33, 34) of the housing (32), and the two halves (37.1, 37.2) lie against each other on edges that are diametrically opposed to each other.

14. The multichannel syringe according to one of claims 6 to 13, wherein the housing (32) has a second tapering (33.2, 34.2) at the top.

15. The multichannel syringe according to one of claims 8 to 14, wherein the side walls (33, 34) and/or the halves (37.1, 37.2) of the barrel holding apparatus (37) are connected to each other and/or aligned with each other by latching elements (43 to 46 and 47 to 50), and/or by heat staking, and/or by welding, and/or by adhering, and/or by centering elements (51, 52, 59, 60; 53, 54, 61, 62).

16. The multichannel syringe according to one of claims 1 to 15, wherein the barrel holding apparatus (37) has a code (40) on the top edge.

17. The multichannel syringe according to one of claims 6 to 16, wherein the housing (32) has bars (63, 64) that project on the inside and are slotted in an axial direction and into which ribs (5.1, 5.2) of the drive rod (2) engage.

18. The multichannel syringe according to one of claims 1 to 17, wherein the plunger unit (1) is injection molded as a single part, and/or the barrel unit (18), and/or the housing (32), and/or the barrel holding apparatus (37) are injection molded as a single part.

19. Use of a multichannel syringe (72) according to one of claims 1 to 18, with a metering device (74) for metering liquids in a laboratory, having a first holding apparatus (76) for a barrel holding apparatus (37) of a syringe barrel and an axially movable second holding apparatus (80) for a plunger holding apparatus (6) of a syringe plunger.

20. The use according to claim 19, with a manually driven or an electric-motor-driven manageable or stationary metering device (74).

## Revendications

1. Seringue multivoie fonctionnant comme une pipette à déplacement positif, destinée à être utilisé avec un dispositif de dosage (72) pour le dosage de liquides en laboratoire avec un premier système de maintien pour un système de maintien de cylindre (37) d'un cylindre de seringue et un deuxième système de maintien déplaçable axialement pour un système de maintien de piston (6) d'un piston de seringue, comportant
• une unité de piston (1) monobloc en plastique, présentant une tige d'entraînement (2) avec le système de maintien de piston (6) à l'extrémité supérieure, une traverse (3) orientée perpendiculairement à la tige d'entraînement à l'extrémité inférieure de la tige d'entraînement (2) et plusieurs pistons de seringue (4) parallèles à la tige d'entraînement (2), faisant saillie vers le bas à partir de la traverse (3),
• une unité de cylindre (18) monobloc en plastique, comportant un support (71) et au moins une rangée de cylindres de seringue (20) agencés parallèlement côté à côte, faisant saillie vers le bas à partir du support (71) et possédant respectivement des ouvertures de seringue inférieures (22), des ouvertures de seringue supérieures (21) et une zone de course cylindrique (24) à l'intérieur, pour un piston de seringue (4) de l'unité de piston (1),
• dans laquelle chaque piston de seringue (4) s'engage dans un cylindre de seringue (20) à travers une ouverture de seringue supérieure (21) tout en étant guidé de façon étanche dans la zone de course (24), et
• le système de maintien de cylindre (37) est disposé au-dessus du cylindre de seringue (20) et relié au support (71).

2. Seringue multivoie selon la revendication 1, dans laquelle la traverse (3) est en forme de plaque, présente une base (8) rectiligne orientée perpendiculairement à la tige d'entraînement (2), à partir de laquelle les pistons de seringue (4) font saillie vers le bas, possède un premier rétrécissement (9) sur le haut, la tige d'entraînement (2) faisant saillie vers le haut à partir de l'extrémité supérieure de la traverse (3).

3. Seringue multivoie selon la revendication 1 ou 2, dans laquelle chaque piston de seringue (4) présente une tige de piston (12) reliée à la traverse (3) sur le haut et à un piston (13) sur le bas, lequel est guidé de façon étanche dans la zone de course (24).

4. Seringue multivoie selon l'une des revendications 1 à 3, dans laquelle chaque piston de seringue (4) présente une pointe de piston (16) à l'extrémité inférieure et chaque cylindre de seringue (20) présente une pointe de cylindre (25) à l'extrémité inférieure, dans laquelle la pointe de piston (16) peut être insérée.

5. Seringue multivoie selon l'une des revendications 1 à 4, dans laquelle la traverse (3) et/ou la tige d'entraînement (2) et/ou les tiges de piston (12) présentent des nervures (11.1, 11.2, 5.1 à 5.4, 17.1 à 17.4) étendues parallèlement aux pistons de seringue (4), faisant saillie vers l'extérieur.

6. Seringue multivoie selon l'une des revendications 1 à 5, dans laquelle le support (71) comporte une paroi de fond (19) d'un boîtier (32), laquelle est conçue d'un seul tenant avec les cylindres de seringue (20), et le boîtier (32) présente des parois latérales (33, 34) faisant saillie vers le haut à partir de la paroi de fond (19), lesquelles sont reliées au système de maintien de cylindre (37).

7. Seringue multivoie selon la revendication 6, dans laquelle le support (71) comporte le boîtier (32).

8. Seringue multivoie selon la revendication 6 ou 7, dans laquelle la paroi de fond (19) est reliée d'un seul tenant aux parois latérales (33, 34) sur deux côtés longitudinaux opposés par le biais de charnières à film (29, 30), au moins une paroi latérale (33, 34) est reliée au système de maintien de cylindre (37) sur le haut, les parois latérales (33, 34) sont rabattues ensemble autour des charnières à film (29, 30) et les parois latérales (33, 34) rabattues ensemble sont reliées les unes aux autres.

9. Seringue multivoie selon la revendication 8, dans laquelle les parois latérales (33, 34) présentent des parties de paroi latérale étroites (35, 36) faisant saillie sur leurs deux bords latéraux, où deux parties de paroi latérale étroites (35, 36) des parois latérales (33, 34) rabattues ensemble forment respectivement conjointement une paroi latérale étroite.

10. Seringue multivoie selon l'une des revendications 1 à 9, dans laquelle le support (71) est relié d'un seul tenant avec le système de maintien de cylindre (37).

11. Seringue multivoie selon l'une des revendications 1 à 10, dans laquelle le système de maintien de cylindre (37) présente une bride (38) en forme de disque annulaire, et la tige d'entraînement (2) est disposée sur l'axe médian de la bride (38).

12. Seringue multivoie selon la revendication 11, dans laquelle le système de maintien de cylindre (37) présente un tenon de maintien (39) en forme de cylindre creux, la tige d'entraînement (2) est disposée sur l'axe médian du tenon de maintien (39), et la bride (38) est reliée à l'extrémité supérieure du tenon de maintien (39).

13. Seringue multivoie selon l'une des revendications 8 à 12, dans laquelle le système de maintien de cylindre (37) présente deux moitiés (37.1, 37.2), où chaque moitié (37.1, 37.2) est reliée à une paroi latérale (33, 34) du boîtier (32) et les deux moitiés (37.1, 37.2) s'appliquent l'une sur l'autre sur des bords diamétralement opposés.

14. Seringue multivoie selon l'une des revendications 6 à 13, dans laquelle le boîtier (32) présente un deuxième rétrécissement (33.2, 34.2) sur le haut.

15. Seringue multivoie selon l'une des revendications 8 à 14, dans laquelle les parois latérales (33, 34) et/ou les moitiés (37.1, 37.2) du système de maintien de cylindre (37) sont reliées les unes aux autres par des éléments à encliquetage (43 à 46 et 47 à 50) et/ou par matage à chaud et/ou par soudage et/ou par collage et/ou par des éléments de centrage (51, 52, 59, 60 ; 53, 54, 61, 62) et/ou alignées les unes avec les autres.

16. Seringue multivoie selon l'une des revendications 1 à 15, dans laquelle le système de maintien de cylindre (37) présente un codage (40) sur le bord supérieur.

17. Seringue multivoie selon l'une des revendications 6 à 16, dans laquelle le boîtier (32) présente des âmes (63, 64) fendues dans la direction axiale, faisant saillie sur les faces intérieures, dans lesquelles s'engagent les nervures (5.1, 5.2) de la tige d'entraînement (2).

18. Seringue multivoie selon l'une des revendications 1 à 17, dans laquelle l'unité de piston (1) est moulée par injection d'un seul tenant et/ou dans laquelle l'unité de cylindre (18) et/ou le boîtier (32) et/ou le système de maintien de cylindre (37) est/sont moulé(s) par injection d'un seul tenant.

19. Utilisation d'une seringue multivoie (72) selon l'une des revendications 1 à 18 comprenant un dispositif de dosage (74) pour le dosage de liquides en laboratoire, comprenant un premier système de maintien (76) pour un système de maintien de cylindre (37) d'un cylindre de seringue et un deuxième système de maintien (80) déplaçable axialement pour un système de maintien de piston (6) d'un piston de seringue.

20. Utilisation selon la revendication 19, avec un dispositif de dosage (74) manipulable ou stationnaire, entraîné manuellement ou entraîné par un moteur électrique.
